(19) Europäisches Patentamt
European Patent Office
Office européen des brevets

(11) Numéro de publication: **0 383 150 B1**

(12) **FASCICULE DE BREVET EUROPEEN**

(45) Date de publication de fascicule du brevet: **22.06.94**

(51) Int. Cl.5: **C08J 5/06**, C23C 22/02

(21) Numéro de dépôt: **90102284.8**

(22) Date de dépôt: **06.02.90**

# (54) Procédés pour traiter un renfort métallique de façon à favoriser son adhesion à une composition à base de caoutchouc et pour réaliser un article avec ce renfort; renforts et articles obtenus avec ces procédés.

(30) Priorité: **17.02.89 FR 8902214**

(43) Date de publication de la demande:
**22.08.90 Bulletin 90/34**

(45) Mention de la délivrance du brevet:
**22.06.94 Bulletin 94/25**

(84) Etats contractants désignés:
**AT BE CH DE DK ES FR GB GR IT LI LU NL SE**

(56) Documents cités:
**EP-A- 0 061 986**
**EP-A- 0 137 986**
**US-A- 4 182 639**
**US-A- 4 192 694**

**INTERNATIONAL POLYMER SCIENCE AND TECHNOLOGY, vol. 11, no. 12, 1984, pages 83-90, Shawbury, Shrewsbury, GB; M. ASHIDA: "Adhesion of rubber to metal"**

(73) Titulaire: **COMPAGNIE GENERALE DES ETABLISSEMENTS MICHELIN - MICHELIN & CIE**
**12, Cours Sablon**
**F-63040 Clermont-Ferrand Cédex(FR)**

(72) Inventeur: **Martigny, Patrick**
**28, rue Fontgiève**
**F-63100 Clermont-Ferrand(FR)**
Inventeur: **Vasseur, Didier**
**Rue de Bouys,**
**Lot Le Pico**
**F-63100 Clermont-Ferrand(FR)**

(74) Mandataire: **Doussaint, Jean-Marie et al**
**MICHELIN & CIE**
**Service K. Brevets**
**F-63040 Clermont-Ferrand Cedex (FR)**

**EP 0 383 150 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

L'invention concerne les procédés qui permettent de faire adhérer des renforts dont la surface au moins est métallique à des compositions à base de caoutchouc. Ces procédés sont utilisés par exemple pour réaliser des articles tels que des courroies, des tuyaux, des enveloppes de pneumatiques, ces articles étant renforcés avec ces renforts métalliques qui sont par exemple des fils, des câbles, des tringles.

Il est connu d'incorporer dans ces compositions des composés métalliques, notamment des composés du cobalt, pour favoriser l'adhésion des renforts métalliques à du caoutchouc. De tels composés sont décrits par exemple dans les brevets ou demandes de brevets suivants : FR-A-2 198 830, FR-A-2 311 797, FR-A-2 368 515, GB-A-1 122 528, US-A-2 912 355, US-A-3 905 947, US-A-4 057 529, US-A-4 203 874, EP-A-3820, EP-A-9000, DD-A-122 255, demande JP 45-114693 publiée sous le n° 49-20072.

Cette technique présente les inconvénients suivants :

- les composés métalliques modifient profondément les propriétés de mise en oeuvre et les performances des compositions vulcanisées, en particulier la tenue au vieillissement thermique est notablement altérée ;
- les performances en adhésion des articles obtenus sont parfois insuffisantes, et on peut observer une mauvaise tenue de l'adhésion aux températures élevées et/ou vis-à-vis de la corrosion, notamment la corrosion due à l'eau salée.

On a proposé de déposer sur la surface des renforts une couche constituée d'un métal ou d'un alliage de métaux, de façon à améliorer l'adhésion aux compositions de caoutchouc, ce dépôt étant réalisé par voie électrolytique ou chimique, comme décrit par exemple dans les documents suivants : FR-A-2 387 273, FR-A-2 426 562, FR-A-2 445 764, EP-A-9846, EP-A-188 036, EP-A-159 600. Cette technique présente l'inconvénient de rendre le tréfilage très difficile.

D'autre part un tel dépôt est très difficile à réaliser sur des fils fins.

On a aussi proposé d'enduire les renforts, ou les compositions à base de caoutchouc, avec un composé organométallique susceptible de favoriser l'adhésion caoutchouc-métal, et de provoquer ensuite la vulcanisation de l'ensemble constitué par les renforts, le composé organométallique et les compositions, comme décrit par exemple dans les documents suivants : EP-A-137 986, JP-A-54-146880 (Kokai). Les articles ainsi réalisés se caractérisent par une grande fragilité.

Le but de l'invention est de remédier à ces inconvénients.

En conséquence, le procédé conforme à l'invention pour traiter un renfort dont la surface au moins est métallique de façon à favoriser son adhésion à une composition à base de caoutchouc, est caractérisé en ce qu'on met la surface de ce renfort au contact d'une solution d'au moins un composé de cobalt et/ou de nickel dans au moins un composé organique contenant un ou plusieurs groupements hydroxyle à une température supérieure à 100 °C et en le qu'on enlève ensuite la solution du renfort avant de mettre le renfort au contact de la composition.

L'invention concerne également les renforts obtenus selon le procédé conforme à la définition précédente.

L'invention concerne également un procédé pour réaliser un article en caoutchouc caractérisé en ce qu'on vulcanise une composition à base de caoutchouc au contact d'un renfort conforme aux définitions précédentes, la composition étant de préférence dépourvue de composé de cobalt et/ou de nickel susceptible de favoriser l'adhésion du renfort à la composition.

L'invention concerne également les articles en caoutchoucs vulcanisés ou non vulcanisés contenant des renforts conformes à l'invention.

Les composés de cobalt et/ou de nickel utilisables dans l'invention peuvent comporter ou non du soufre.

Les composés soufrés utilisables sont par exemple des thiophène carboxylates de formule (1)

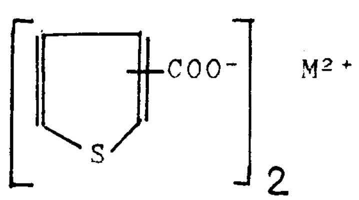

ou les composés de formule (2) :

$[COO^{-}\text{-}(CH_2)_m\text{-}S_n\text{-}(CH_2)_p\text{-}COO^{-}]M^{2+}$

dans laquelle m, n, p, égaux ou différents, prennent les valeurs pouvant varier de 1 à 5
ou les composés de formule (3)

$[S^{-}\text{-}(CH_2)_q\text{-}S^{-}]\ M^{2+}$

dans laquelle q est égal à 6.

Dans toutes ces formules, M représente le cobalt et/ou le nickel. Ces composés soufrés peuvent être hydratés ou non.

A titre d'exemple, de tels composés sont par exemple les thiodipropionates, de formule
$[COO^{-}\text{-}(CH_2)_2\text{-}S\text{-}(CH_2)_2\text{-}COO^{-}]M^{2+}$
les dithiodipropionates de formule
$[COO^{-}\text{-}(CH_2)_2\text{-}S\text{-}S\text{-}(CH_2)_2\text{-}COO^{-}]M^{2+}$
les thiodiacétates de formule $[COO^{-}\text{-}CH_2\text{-}S\text{-}CH_2\text{-}COO^{-}]M^{2+}$
les hexanedithiolates de formule $[S^{-}\text{-}(CH_2)_6\text{-}S^{-}]M^{2+}$
De préférence comme produit soufré on utilise le thiodipropionate de cobalt ou de nickel, correspondant à la formule (2) dans laquelle m et p sont égaux à 2 et n est égal à 1.

Les composés de cobalt et/ou de nickel non soufrés utilisables dans l'invention peuvent être des sels organiques, par exemple des acétates, des propionates, des benzoates, des naphténates, des hydroxydes, des complexes organiques, par exemple des acétylacétonates. Ces composés non soufrés peuvent être hydratés ou non.

Plusieurs de ces produits soufrés et/ou non soufrés peuvent être utilisés en mélange.

De préférence, on utilise des composés de cobalt, le composé le plus avantageux étant le thiodipropionate de cobalt.

Les composés organiques à groupements hydroxyle peuvent être par exemple l'éthylène glycol, le diéthylèneglycol, les polyéthylèneglycols, le 1,3-butanediol, plusiers de ces composés pouvant être utilisés en mélanges.

Les caoutchoucs utilisables dans l'invention sont de préférence des caoutchoucs vulcanisables au soufre, comme par example le caoutchouc naturel, le polybutadiène, les copolymères styrène-butadiène, le polyisoprène, ou des mélanges de tels caoutchoucs. Les compositions à base de tels caoutchoucs contiennent du soufre et peuvent contenir de façon connue divers adjuvants, par example des accélérateurs de vulcanisation, des antioxydants, des charges.

Les renforts peuvent être constitués entièrement de métaux, ou comporter des matières non métalliques, par exemple des matières plastiques, recouvertes d'un au plusieurs métaux ou alliages. De préférence, la surface métallique du renfort destinée à venir au contact de la solution est réalisée an totalité au en partie avec au moins un métal dont le potentiel d'électronégativité est inférieur à celui du métal ou à ceux des métaux (cobalt et/ou nickel) du ou des composés contenus dans la solution. Par exemple, la surface métallique du renfort peut être réalisée avec du zinc, du fer, du chrome, du manganèse, du magnésium, de l'aluminium, de l'étain, ou avec de l'acier, du laiton. Le potentiel d'électronégativité est déterminé selon l'échelle de la méthode de Pauling.

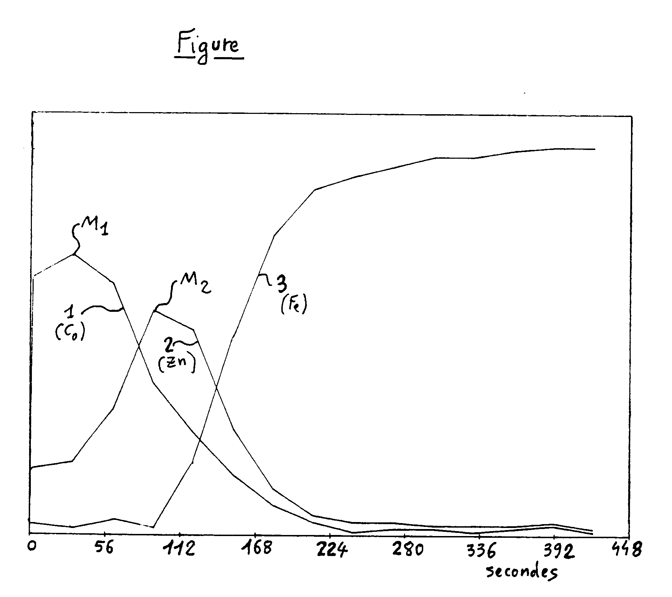

L'invention sera mieux comprise à l'aide des exemples qui suivent et de la figure unique qui montre de façon schématique le profil Auger d'un renfort traité conformément à l'invention.

On réalise une formulation de base dont la constitution est la suivante :

| | |
|---|---|
| caoutchouc naturel | 100 |
| noir de carbone | 60 |
| oxyde de zinc (Zn0) | 8 |
| acide stéarique | 0,7 |
| antioxydant santoflex 13 | 2 |
| soufre | 5 |
| DCBS | 1 |

Tous ces chiffres correspondent à des parties en poids, il en est de même pour toutes les compositions à base de caoutchouc décrites dans la présente demande.

Le santoflex 13 est un produit de la société Monsanto, de nomenclature :
N-(1,3-diméthylbutyl)-N′-phényl-paraphénylènediamine.

Le DCBS est le dicyclohexylbenzothiazolsulfénamide, ce produit servant d'accélérateur de vulcanisation.

Dans tous les exemples qui suivent, on utilise deux compositions :

- soit la formulation de base telle quelle, cette composition étant référencée A ;
- soit la formulation de base en y incorporant 3 parties en poids de naphténate de cobalt, cette composition étant référencée B, le naphténate de cobalt favorisant l'adhésion des renforts métalliques, à cette composition.

On utilise les renforts métalliques suivants :

- un câble de formule 6x23 constitué par 6 fils d'acier laitonné torsadés ensemble, ces fils ayant un diamètre de 0,23 mm. Ce renfort est référencé "a" ; le laiton est constitué par 68 % de cuivre et 32 % de zinc (% en poids) ;
- un câble de formule 6x23 constitué par 6 fils d'acier non laitonné. Les fils qui ont un diamètre de 0,23 mm sont torsadés ensemble. Ce renfort est référencé "b",
- un fil d'acier zingué, dont le diamètre est de 1,3 mm. Ce renfort est référencé "c".

Dans le naphténate de cobalt, et dans tous les composés de cobalt et de nickel décrits dans les exemples qui suivent, le cobalt et le nickel ont la valence 2 ($Co^{2+}$, $Ni^{2+}$).

Exemple 1

Les renforts a, b, c précédemment définis sont traités conformément à l'invention avec des composés de cobalt contenant du soufre. Ces traitements sont donnés dans le tableau 1 suivant :

Tableau 1

| Renfort de départ | Renfort traité | | | | |
|---|---|---|---|---|---|
| | Référence du renfort traité | Conditions de traitement | | | |
| | | Durée | Température | Composé de cobalt | Composé hydroxylé |
| a (câble laitonné) | a1 | 10 secondes | 160°C | TDP | EG |
| | a2 | 30 secondes | 200°C | TDP | DEG |
| | a3 | 10 secondes | 160°C | TDA | EG |
| | a4 | 10 secondes | 160°C | HDT | EG |
| b (câble d'acier) | b1 | 30 secondes | 130°C | TDP | EG |
| | b2 | 30 secondes | 130°C | DTDP | EG |
| c (fil d'acier zingué) | c1 | 1 seconde | 130°C | TDP | EG |
| | c2 | 5 secondes | 130°C | TDP | PEG |
| | c3 | 5 secondes | 130°C | TDP | BDI |
| | c4 | 1 minute | 130°C | TDA | EG |
| | c5 | 5 secondes | 130°C | DTDP | EG |
| | c6 | 30 secondes | 130°C | HDT | EG |

**Abréviations utilisées** :

TDP : thiodipropionate ; TDA : thiodiacétate ;
HDT : hexanedithiolate ; DTDP : dithiodipropionate ;
EG : ethylèneglycol ; DEG : diéthylèneglycol ;
PEG : polyéthylèneglycol ; BDI : 1,3-butanediol.

Le traitement s'effectue en plongeant le renfort a, b ou c dans la solution de traitement constituée par le composé organique hydroxylé liquide contenant en solution 1 % en poids du composé de cobalt correspondant.

La solution contenant le renfort est portée à une température supérieure à 100 °C, pendant un temps donné, ces températures et ces temps de contact étant indiqués dans le tableau 1.

Les renforts traités sont ensuite extraits de la solution de traitement, et on les rince, par exemple par immersion, avec un alcool à bas point d'ébullition notamment l'éthanol.

On réalise ensuite des échantillons de mesures en incorporant les renforts, non traités ou traités, dans la composition A ou B. Chaque échantillon comporte un renfort disposé de façon rectiligne et enrobé de composition A ou B sur une longueur de 1 cm, cet échantillon étant vulcanisé.

Les échantillons obtenus sont référencés par la lettre correspondant à la composition, suivie de la référence correspondant au renfort, traité ou non traité, incorporé dans cette composition. Par exemple

l'échantillon Aa correspond à un câble d'acier laitonné non traité "a" incorporé dans la composition A, dépourvue de composé de cobalt, l'échantillon Aa1 correspond à un câble d'acier laitonné traité a1 incorporé dans la composition A, l'échantillon Ba correspond à un câble d'acier laitonné non traité "a" incorporé dans la composition B, comportant du naphténate de cobalt.

Tous les renforts, traités ou non, sont associés à la composition A, par contre la composition B n'est associée qu'aux renforts a, b, c non traités.

On effectue sur tous les échantillons obtenus des tests de traction statique, pour arracher les renforts des compositions vulcanisées, la vitesse de traction étant de 104 mm/minute. Les résultats de ces tests sont donnés dans le tableau 2 suivant. Sur ce tableau les résultats des tests de traction sont donnés pour chaque échantillon sous forme de deux chiffres qui se suivent : le premier de ces chiffres donne la force en kilos nécessaire pour arracher le renfort de la composition dans laquelle il est incorporé et le deuxième chiffre, exprimé en %, donne le % de surface du renfort dénudée lors du test, c'est-à-dire le % de surface qui n'est plus recouverte par la composition, ces deux chiffres étant séparés par une barre oblique. Chaque échantillon est réalisé en trois séries, chaque série correspondant à une plaque comportant la composition A ou B et dix renforts identiques entourés par cette composition et disposés parallèlement les uns aux autres, sur un plan. Chaque plaque est vulcanisée de façon connue par cuisson à 150 °C, pendant 50 minutes pour la composition A et pendant 35 minutes pour la composition B.

On découpe une de ces trois plaques, après vulcanisation, entre les renforts et parallèlement à ceux-ci, ce qui donne une série de 10 échantillons identiques que l'on soumet aux tests de traction ; on effectue sur une autre de ces trois plaques vulcanisées un traitement de surcuisson à 140 °C pendant 12 heures. On découpe ensuite la plaque comme précédemment indiqué pour obtenir une série de 10 échantillons identiques que l'on soumet au test de traction.

On effectue sur la dernière des trois plaques vulcanisées un traitement de corrosion pendant 7 jours à 20 °C dans une solution d'eau salée contenant 1 % en poids de chlorure de sodium. On découpe ensuite la plaque comme précédemment indiqué pour obtenir une série de 10 échantillons identiques que l'on soumet au test de traction.

Chaque résultat de test du tableau 2 correspond donc à la moyenne arithmétique de 10 mesures.

Les tests de traction donnent ainsi une estimation de l'adhésion des échantillons dans les trois conditions préalablement décrites, (après cuisson, après surcuisson, après corrosion) l'adhésion étant d'autant meilleure que la force est plus élevée (premier chiffre) et que le % de dénudage est plus faible. Le % de dénudage, en particulier, a une grande importance, car il ne dépend essentiellement que du renfort, tandis que la force dépend à la fois du renfort et de la composition.

Tableau 2

| Echantillons | Résultats des tests de traction | | |
|---|---|---|---|
| | Après cuisson | Après surcuisson | Après corrosion |
| A base de câbles laitonnés | | | |
| Ba | 31/30 % | 15/80 % | 30/50 % |
| Aa | 25/30 % | 13/80 % | 22/80 % |
| Aa1 | 30/20 % | 15/80 % | 29/20 % |
| Aa2 | 30/30 % | 16/80 % | 29/40 % |
| Aa3 | 28/30 % | 14/80 % | 29/30 % |
| Aa4 | 30/30 % | 16/80 % | 27/50 % |
| A base de câbles d'acier | | | |
| Bb | 8/98 % | 9/100 % | 9/100 % |
| Ab | 5/100 % | 3/100 % | 3/100 % |
| Ab1 | 9/98 % | 16/95 % | 4/100 % |
| Ab2 | 26/60 % | 25/60 % | 5/100 % |
| A base de fils d'acier zingués | | | |
| Bc | 107/0 % | 10/100 % | 5/100 % |
| Ac | 8/100 % | 5/100 % | 5/100 % |
| Ac1 | 101/0 % | 92/0 % | 96/5 % |
| Ac2 | 105/0 % | 93/0 % | 80/5 % |
| Ac3 | 100/0 % | 90/0 % | 80/5 % |
| Ac4 | 103/0 % | 108/0 % | |
| Ac5 | 112/0 % | 97/0 % | |
| Ac6 | 86/15 % | 73/20 % | |

L'état de la technique est représenté par les échantillons Ba, Bb, Bc (renforts non traités associés à une composition contenant un composé de cobalt). L'étude du tableau 2 permet de faire les remarques suivantes.

a) Câbles laitonnés

Les câbles traités conformément à l'invention et utilisés avec la composition A dépourvue de composé de cobalt, donnent une adhésion supérieure ou comparable à celle que l'on obtient de façon classique avec des câbles non traités utilisés avec la composition B comportant un composé de cobalt. Cette adhésion est de toute façon supérieure à celle que l'on obtient avec le câble non traité utilisé avec la composition A dépourvue de composé de cobalt.

Le câble traité avec la solution de TDP dans l'EG (échantillon Aa1) donne une bien meilleure adhésion après corrosion que l'état de la technique (échantillon Ba), car le % de métal dénudé est très inférieur.

b) Câbles d'acier

Les câbles traités conformément à l'invention et utilisés avec la composition A donnent des résultats supérieurs à l'état de la technique, après cuisson et après surcuisson, l'adhésion après corrosion étant du même ordre que dans l'état de la technique.

c) Fils zingués

Les fils traités conformément à l'invention et utilisés avec la composition A donnent des résultats comparables à l'état de la technique après cuisson, et des résultats nettement meilleurs après surcuisson et après corrosion.

Cette adhésion est de toute façon très supérieure à celle que l'on obtient avec le fil non traité utilisé avec la composition A dépourvue de composé de cobalt.

Les tests d'adhésion après surcuisson et après corrosion sont particulièrement importants dans le cas des enveloppes de pneumatiques, car celles-ci lors du roulage ont tendance à chauffer, surtout dans le cas des enveloppes de pneumatiques pour véhicules poids lourd, et ces enveloppes sont soumises à des actions corrosives importantes lors du roulage sur des routes où l'on a mis du sel pour enlever la neige.

Les résultats obtenus grâce à l'invention permettent d'utiliser des compositions dépourvues de composés de cobalt, ce qui permet une économie notoire. En effet le traitement des renforts métalliques eux-mêmes avec un composé de cobalt, avant incorporation dans une composition de caoutchouc, est économique car il utilise des quantités extrêmement faibles de ces composés.

Exemple 2

Cet exemple décrit le traitement de renforts métalliques avec des composés de cobalt non soufrés, et les résultats de collage obtenus.

Les renforts de base qui sont les renforts a et c précédemment décrits, sont traités conformément au tableau 3 suivant. Les composés organiques hydroxylés et les composés de cobalt forment des solutions comportant 1 % en poids des composés de cobalt.

Tableau 3

| Renfort de départ | Renfort traité | | | | |
|---|---|---|---|---|---|
| | Référence du renfort traité | Conditions de traitement | | | |
| | | Durée | Température | Composé de cobalt | Composé organique hydroxylé |
| a | a5 | 30 secondes | 160°C | ACAC | EG |
| | a6 | 30 secondes | 200°C | ACAC | DEG |
| | a7 | 30 secondes | 160°C | AC | EG |
| | a8 | 30 secondes | 200°C | AC | DEG |
| | a9 | 30 secondes | 160°C | HYD | EG |
| | a10 | 30 secondes | 200°C | HYD | DEG |
| c | c7 | 1 minute | 130°C | ACAC | EG |
| | c8 | 1 minute | 130°C | AC | EG |
| | c9 | 1 minute | 130°C | HYD | EG |

**Les nouvelles abréviations ont la signification suivante :**
**ACAC : acétylacétonate, AC = acétate, HYD : hydroxyde**

On prépare les échantillons et on les teste comme dans l'exemple 1. Les résultats des tests sont donnés dans le tableau 4 suivant.

Tableau 4

| Echantillons | Résultats des tests de traction | | |
|---|---|---|---|
| | Après cuisson | Après surcuisson | Après corrosion |
| A base de câbles laitonnés | | | |
| Ba | 31/30 % | 15/80 % | 30/50 % |
| Aa | 25/30 % | 13/80 % | 22/80 % |
| Aa5 | 29/30 % | 15/90 % | 33/30 % |
| Aa6 | 34/10 % | 20/90 % | 36/15 % |
| Aa7 | 27/30 % | 20/90 % | 31/40 % |
| Aa8 | 33/10 % | 18/90 % | 34/10 % |
| Aa9 | 28/30 % | 19/90 % | 29/20 % |
| Aa10 | 33/10 % | 19/90 % | 39/5 % |
| A base de fils zingués | | | |
| Bc | 107/0 % | 10/100 % | 5/100 % |
| Ac | 8/100 % | 5/100 % | 5/100 % |
| Ac7 | 77/10 % | 46/80 % | 74/40 % |
| Ac8 | 100/5 % | 46/80 % | 78/20 % |
| Ac9 | 95/20 % | 18/100 % | 64/40 % |

L'étude du tableau 4 conduit aux conclusions suivantes :

a) Câbles laitonnés

Les câbles traités conformément à l'invention et utilisés avec la composition A dépourvue de composé de cobalt donnent une adhésion comparable à celle de l'état de la technique après cuisson ou après surcuisson, et ils donnent des résultats nettement meilleurs que ceux de l'état de la technique après corrosion (% de métal dénudé très inférieur).

b) Fils zingués

Les fils traités conformément à l'invention et utilisés avec la composition A dépourvue de composé de cobalt donnent un collage inférieur à celui de l'état de la technique après cuisson, mais ils donnent une adhésion nettement meilleure après surcuisson et après corrosion.

## Exemple 3

Cet exemple décrit le traitement de renforts métalliques avec des composés de nickel, et les résultats d'adhésion obtenus. Ces renforts sont les câbles laitonnés "a" précédemment décrits, qui sont traités conformément au tableau 5 suivant. Les composés hydroxylés et les composés de nickel forment des solutions contenant 1 % en poids des composés de nickel.

Tableau 5

| Renfort de départ | Renfort traité | | | | | |
|---|---|---|---|---|---|---|
| | Référence du renfort traité | Conditions de traitement | | | | |
| | | Durée | Température | Composé de nickel | Composé hydroxylé |
| a | a11 | 10 secondes | 160°C | TDP | EG |
| | a12 | 10 secondes | 160°C | ACAC | EG |
| | a13 | 10 secondes | 160°C | AC | EG |

On prépare les échantillons et on les teste comme dans l'exemple I après cuisson et après surcuisson. Les résultats des tests sont donnés dans le tableau 6 suivant :

Tableau 6

| Echantillons | Résultats des tests de traction | |
|---|---|---|
| | Après cuisson | Après surcuisson |
| Ba | 31/30 % | 15/80 % |
| Aa | 25/30 % | 13/80 % |
| Aa11 | 33/20 % | 18/70 % |
| Aa12 | 34/10 % | 16/80 % |
| Aa13 | 32/20 % | 17/90 % |

L'étude du tableau 6 conduit aux conclusions suivantes :
Les câbles traités conformément à l'invention et utilisés avec la composition A dépourvue de composé de cobalt donnent par rapport à l'état de la technique de meilleurs résultats d'adhésion après cuisson, et des résultats comparables après surcuisson.

Exemple 4 :

Cet exemple a pour but de montrer que les renforts traités conformément à l'invention peuvent être employés si on le désire avec des compositions comportant des composés métalliques favorisant l'adhésion. On réalise dans ce but conformément à l'exemple 1 des échantillons à base de composition B et des renforts a1, b1, c1 dont le traitement est décrit dans le tableau 1. On effectue sur ces échantillons les tests décrits dans l'exemple 1. Les résultats d'adhésion sont donnés dans le tableau 7 suivant :

TABLEAU 7

| Echantillons | Résultats des tests de traction | | |
|---|---|---|---|
| | Après cuisson | Après surcuisson | Après corrosion |
| Ba | 31/30 % | 15/80 % | 30/50 % |
| Bb | 8/98 % | 9/100 % | 9/100 % |
| Bc | 107/0 % | 10/100 % | 5/100 % |
| Ba1 | 30/20 % | 22/30 % | 29/30 % |
| Bb1 | 29/50 % | 27/70 % | 30/50 % |
| Bc1 | 114/0 % | 77/5 % | 112/0 % |

L'étude du tableau 7 montre que l'on obtient de meilleurs résultats d'adhésion avec les renforts traités qu'avec les renforts non traités.

Exemple 5

Le but de cet exemple est de montrer que le traitement de renforts métalliques avec des composés métalliques n'est pas efficace si on remplace les composés organiques hydroxylés par des composés non hydroxylés.

On utilise dans cet exemple des renforts "a" et "c" que l'on traite conformément au tableau 8 ci-dessous, la teneur du composé de cobalt dans le composé organique non hydroxylé étant de 1 % en poids.

Tableau 8

| Renfort de départ | Renfort traité | | | | |
|---|---|---|---|---|---|
| | Référence du renfort traité | Conditions de traitement | | | |
| | | Durée | Température | Composé de cobalt | Composé non hydroxylé |
| a | a14 | 10 minutes | 110°C | TDP | TOL |
| | a15 | 30 secondes | 160°C | TDP | HP |
| | a16 | 30 secondes | 160°C | TDP | GV |
| c | c10 | 10 minutes | 110°C | TDP | TOL |
| | c11 | 1 minute | 130°C | TDP | HP |
| | c12 | 1 minute | 130°C | TDP | GV |

**Les nouvelles abréviations sont les suivantes : TOL : Toluène ; HP : huile de paraffine ; GV : graisse de vaseline.**

On obtient et on traite les échantillons comme dans l'exemple 1, les résultats des tests de traction sont donnés dans le tableau 9 ci-dessous.

Tableau 9

| Echantillons | Résultats des tests de traction | | |
|---|---|---|---|
| | Après cuisson | Après surcuisson | Après corrosion |
| Ba | 31/30 % | 15/80 % | 30/50 % |
| Aa | 25/30 % | 13/80 % | 22/80 % |
| Aa14 | 30/30 % | 15/80 % | 20/50 % |
| Aa15 | 24/30 % | 13/90 % | 20/60 % |
| Aa16 | 28/30 % | 13/80 % | 19/60 % |
| Bc | 107/0 % | 10/100 % | 5/100 % |
| Ac | 8/100 % | 5/100 % | 5/100 % |
| Ac10 | 25/80 % | 5/100 % | 6/100 % |
| Ac11 | 18/90 % | 5/100 % | 5/100 % |
| Ac12 | 18/100 % | 5/100 % | 5/100 % |

L'étude du tableau 9 montre que les renforts traités de façon non conforme à l'invention donnent des résultats d'adhésion en général inférieurs à l'état de la technique lorsqu'ils sont associés à la composition A dépourvue de composé de cobalt.

Le procédé conforme à l'invention a été décrit dans le cas où on plonge le renfort dans la solution que l'on chauffe, mais l'invention couvre d'autres modes de réalisation. C'est ainsi par exemple que l'on peut envisager les techniques suivantes : chauffer le renfort pour que sa surface atteigne la température de traitement, et mettre alors cette surface au contact de la solution non chauffée, ou recouvrir la surface du renfort d'une couche de solution, la surface et la solution étant à la température ambiante, et faire passer ensuite le support ainsi enduit dans un four de traitement, l'essentiel étant que l'ensemble consitué par la surface du support et la solution à son contact soit porté à une température supérieure à 100 °C. De préférence cette température est au plus égale à 200 °C. L'enduction de la surface du support avec la solution peut se faire par exemple par trempage dans la solution ou par projection à l'aide d'un jet ou d'un pulvérisateur. Le traitement conforme à l'invention peut être réalisé en continu. Le temps pendant lequel la surface du support et la solution à son contact sont portés à la température de traitement varie en fonction de la solution, de la surface, et de la température, ce temps variant de préférence de 1 seconde à 30 minutes. De préférence, la concentration dans la solution du composé de cobalt et/ou de nickel, ou de l'ensemble de ces composés s'il y en a plusieurs, est au moins égale à 0,1 % en poids, cette concentration étant inférieure à la limite de solubilité de ces composés, à la température de traitement, cette limite de solubilité étant par exemple d'environ 3 % pour les composés du cobalt.

La figure unique du dessin montre un profil Auger obtenu sur un renfort c1 (fil d'acier zingué traité conformément au tableau 1).

Ce profil est obtenu par spectroscopie Auger (AES : Auger Electron Spectroscopy), consistant, de façon connue, à bombarder la surface d'un échantillon de ce renfort avec un faisceau d'électrons primaires pour analyser le faisceau d'électrons Auger émis qui sont caractéristiques des éléments présents. On peut ensuite abraser la surface de l'échantillon, par exemple avec des ions d'argon, pour réaliser un profil en fonction de la profondeur.

On utilise pour cette mesure un appareil de la Société RIBER, France, en employant pour l'abrasion un faisceau d'ions d'argon de 3 keV, la pression dans l'enceinte étant de $4.10^{-5}$ mm Hg ($5{,}33.10^{-3}$Pa), et en employant pour l'analyse un faisceau d'électrons d'énergie 3 keV, la largeur du faisceau étant d'environ 50$\mu$m.

On obtient ainsi un profil élémentaire constitué par 3 courbes référencées 1, 2, 3 sur la figure. La courbe 1 correspond au cobalt, la courbe 2 correspond au zinc de l'acier zingué, et le courbe 3 correspond au fer.

L'axe des abscisses correspond au temps d'abrasion en secondes compté depuis le début de cette abrasion, l'axe des ordonnées représente l'intensité du rayonnement émis correspondant, pour chaque courbe, au métal considéré, l'unité étant arbitraire.

On constate sur la figure que pour des temps d'abrasion faibles, par exemple inférieurs à 100 secondes, le cobalt et le zinc sont tous les deux présents, c'est-à-dire que la surface du renfort comporte à la fois le métal du composé de traitement (cobalt) et au moins un métal existant dans la surface métallique avant le traitement (zinc). Le métal du composé de traitement (cobalt) ne forme donc pas un véritable dépôt en surface.

A titre d'exemple, on constate sur la figure que le maximum $M_1$ de la courbe 1 (cobalt) correspond à un temps très court d'abrasion, ce temps étant inférieur à 1 minute. Ce maximum $M_1$ est situé avant le maximum $M_2$ du zinc (courbe 2) et avant la détection notable du fer.

Les renforts traités conformément à l'invention peuvent être utilisés pour renforcer des articles, notamment des courroies, des tuyaux, des enveloppes de pneumatiques, par exemple sous forme de carcasses ou de nappes sommet dans ces enveloppes, en incorporant ces renforts dans une composition de caoutchouc, cette composition contenant de préférence du soufre, et en vulcanisant l'article ainsi obtenu.

Bien entendu, l'invention n'est pas limitée aux exemples de réalisation précédemment décrits.

## Revendications

1. Procédé pour traiter un renfort dont la surface au moins est métallique de façon à favoriser son adhésion à une composition à base de caoutchouc, caractérisé en ce qu'on met la surface de ce renfort au contact d'une solution d'au moins un composé de cobalt et/ou de nickel dans au moins un composé organique contenant un ou plusieurs groupements hydroxyle à une température supérieure à 100 °C et en ce qu'on enlève ensuite la solution du renfort avant de mettre le renfort au contact de la composition.

2. Procédé selon la revendication 1 caractérisé en ce que la surface métallique du renfort est réalisée en totalité ou en partie avec au moins un métal dont le potentiel d'électronégativité est inférieur à celui du cobalt et/ou à celui du nickel.

3. Procédé selon la revendication 2, caractérisé en ce que le renfort est réalisé en acier, en acier zingué, ou en acier laitonné.

4. Procédé selon l'une quelconque des revendications 1 à 3 caractérisé en ce qu'au moins un composé de cobalt et/ou de nickel est un composé soufré, ou un hydrate d'un composé soufré.

5. Procédé selon la revendication 4, caractérisé en ce que au moins un composé de cobalt et/ou de nickel est constitué :
   - soit par un thiophène carboxylate de formule (1)

     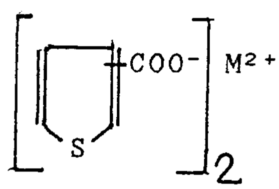

   - soit par un composé de formule (2)

     $[COO^{-}-(CH_2)_m-S_n-(CH_2)_p-COO^{-}]M^{2+}$

     dans laquelle m, n, p, égaux ou différents, prennent les valeurs pouvant varier de 1 à 5,
   - soit par un composé de formule (3)

     $[S^{-}-(CH_2)_q-S^{-}]M^{2+}$

     dans laquelle q est égal à b.
   - soit par un hydrate d'un de ces composés,
     M représentant le cobalt et/ou le nickel

6. Procédé selon la revendication 5, caractérisé en ce que au moins un composé de cobalt et/ou de nickel est le thiodipropionate de cobalt au de nickel, correspondant à la formule (2) dans laquelle m et p sont égaux à 2 et n est égal à 1.

7. Procédé selon l'une quelconque des revendications 1 à 6, caractérisé en ce qu'au moins un composé de cobalt et/ou de nickel est un composé non soufré au un hydrate d'un composé non soufré.

8. Procédé selon la revendication 7, caractérisé an ce qu'au moins un composé de cobalt et/ou de nickel est un sel organique, un hydroxyde, un complexe organique, ou un hydrate d'un de ces composés.

9. Procédé selon la revendication 8, caractérisé en ce qu'au moins un composé de cobalt et/ou de nickel est choisi dans le groupe constitué par las acétates, les propionates, les benzoates, les naphténates, les hydroxydes, les acétylacétonates, ou les hydrates de ces composés.

10. Procédé selon l'une quelconque des revendications 1 à 9, caractérisé en ce que le composé organique hydroxylé est choisi dans le groupe constitué par l'éthylèneglycol, le diethèthylèneglycol, les polyéthylèneglycols, le 1,3-butanediol.

11. Procédé selon l'une quelconque des revendications 1 à 10, caractérisé en ce que la solution est portée à une température au plus égale à 200 °C.

12. Renfort métallique traité selon le procédé conforme à l'une quelconque des revendications 1 à 11, caractérisé en ce que le profil Auger de ce renfort montre la présence simultanée en surface à la fais du cobalt et/ou du nickel, correspondant au composé de cobalt et/ou de nickel utilisé dans la solution, et d'au mains un métal existant dans la surface métallique avant le traitement.

13. Article comportant au moins un renfort métallique conforme à la revendication 12, et une composition de caoutchouc non vulcanisée au contact de ce renfort.

14. Article selon la revendication 13 caractérisé en ce que la composition contient du soufre et au moins un caoutchouc choisi dans le groupe constitué par le caoutchouc naturel, le polybutadiène, les copolymères styrène-butadiène, la polyisoprène.

15. Article selon l'une quelconque des revendications 13 ou 14, caractérisé en ce que la composition est dépourvue de composé à base de cobalt et/ou de nickel susceptible de favoriser l'adhésion du renfort à la composition.

16. Article selon l'une quelconque des revendications 13 à 15, caractérisé en ce qu'il est une enveloppe de pneumatique crue.

17. Procédé consistant à vulcaniser un article conforme à l'une quelconque des revendications 13 à 16, le renfort adhérant à la composition lors de cette vulcanisation.

18. Article vulcanisé obtenu salon la procédé conforme à la revendication 17.

19. Article vulcanisé selon la revendication 18, caractérisé en ce qu'il est une enveloppe de pneumatique.

**Claims**

1. A method of treating a reinforcement at least the surface of which is metallic so as to promote its adhesion to a rubber-based composition, characterised in that the surface of the reinforcement is placed in contact with a solution of at least one compound of cobalt and/or of nickel in at least one organic compound containing one or more hydroxyl groups at a temperature above 100 °C and in that the solution is then removed from the reinforcement before placing the reinforcement in contact with the composition.

2. A method according to Claim 1, characterised in that the metallic surface of the reinforcement is produced entirely or in part with at least one metal having an electronegativity potential which is less than that of cobalt and/or that of nickel.

3. A method according to Claim 2, characterised in that the reinforcement is made of steel, of zinc-plated steel, or of brass-plated steel.

**4.** A method according to any one of Claims 1 to 3, characterised in that at least one cobalt compound and/or nickel compound is a sulphur-containing compound or a hydrate of a sulphur-containing compound.

**5.** A method according to Claim 4, characterised in that at least one compound of cobalt and/or nickel is formed:

- either by a thiophene carboxylate of Formula (1):

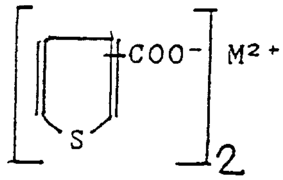

- or by a compound of Formula (2):

$[COO^{-}\text{-}(CH_2)_m\text{-}S_n\text{-}(CH_2)_p\text{-}COO^{-}]M^{2+}$,

in which m, n and p, which may be either identical or different, have values which may vary from 1 to 5,

- or by a compound of Formula (3)

$[S^{-}\text{-}(CH_2)_q\text{-}S^{-}]M^{2+}$,

in which q is equal to 6,

- or by a hydrate of one of these compounds,
  M representing cobalt and/or nickel.

**6.** A method according to Claim 5, characterised in that at least one compound of cobalt and/or nickel is the thiodipropionate of cobalt or nickel, corresponding to formula (2), in which m and p are equal to 2 and n is equal to 1.

**7.** A method according to any one of Claims 1 to 6, characterised in that at least one compound of cobalt and/or nickel is a non-sulphur-containing compound or a hydrate of a non-sulphur-containing compound.

**8.** A method according to Claim 7, characterised in that at least one compound of cobalt and/or nickel is an organic salt, a hydroxide, an organic complex, or a hydrate of one of these compounds.

**9.** A method according to Claim 8, characterised in that at least one compound of cobalt and/or nickel is selected from the group consisting of acetates, propionates, benzoates, naphthenates, hydroxides, acetylacetonates or the hydrates of these compounds.

**10.** A method according to any one of Claims 1 to 9, characterised in that the organic hydroxylated compound is selected from the group consisting of ethylene glycol, diethylene glycol, polyethylene glycols and 1,3-butanediol.

**11.** A method according to any one of Claims 1 to 10, characterised in that the solution is brought to a temperature at most equal to 200 °C.

**12.** A metallic reinforcement treated by the method according to any one of Claims 1 to 11, characterised in that the Auger profile of this reinforcement shows the simultaneous presence on the surface of cobalt and/or nickel, corresponding to the cobalt and/or nickel compound used in the solution, and of at least one metal present in the metallic surface prior to the treatment.

13. An article comprising at least one metal reinforcement according to Claim 12 and an unvulcanised rubber composition in contact with said reinforcement.

14. An article according to Claim 13, characterised in that the composition contains sulphur and at least one rubber selected from the group consisting of natural rubber, polybutadiene, styrene-butadiene copolymers and polyisoprene.

15. An article according to any one of Claims 13 or 14, characterised in that the composition is without a compound based on cobalt and/or nickel which could promote the adhesion of the reinforcement to the composition.

16. An article according to any one of Claims 13 to 15, characterised in that it is a raw tyre.

17. A method consisting of vulcanising an article according to any one of Claims 13 to 16, the reinforcement adhering to the composition upon said vulcanisation.

18. A vulcanised article obtained by the method of Claim 17.

19. A vulcanised article according to Claim 18, characterised in that it is a tyre.

**Patentansprüche**

1. Verfahren zum Behandeln einer Bewehrung, von der mindestens die Oberfläche metallisch ist, um ihre Haftung an einer Zusammensetzung auf Kautschukbasis zu fördern, dadurch gekennzeichnet, daß man die Oberfläche der Bewehrung bei einer Temperatur von mehr als 100 °C in Kontakt mit einer Lösung mit einem Gehalt an mindestens einer Verbindung von Kobalt und/oder Nickel in mindestens einer organischen Verbindung mit einem Gehalt von einer oder mehreren Hydroxylgruppen bringt und man anschließend die Lösung von der Bewehrung entfernt, bevor man sie mit der Zusammensetzung in Kontakt bringt.

2. Verfahren nach Anspruch 1, dadurch gekennzeichnet, daß die metallische Oberfläche der Bewehrung insgesamt oder teilweise aus mindestens einem Metall besteht, dessen Elektronegativität unterhalb der von Kobalt und/oder von Nickel liegt.

3. Verfahren nach Anspruch 2, dadurch gekennzeichnet, daß die Bewehrung aus Stahl, verzinktem Stahl oder vermessingtem Stahl besteht.

4. Verfahren nach einem der Ansprüche 1 bis 3, dadurch gekennzeichnet, daß es sich bei mindestens einer Verbindung von Kobalt und/oder Nickel um eine Schwefelverbindung oder um ein Hydrat einer Schwefelverbindung handelt.

5. Verfahren nach Anspruch 4, dadurch gekennzeichnet, daß es sich bei mindestens einer Verbindung von Kobalt und/oder Nickel um eine der folgenden Verbindungen handelt:
   - ein Thiophencarboxylat der Formel (1)

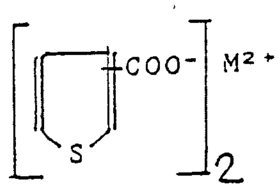

   - eine Verbindung der Formel (2)

$[COO^- \text{-} (CH_2)_m \text{-} S_n \text{-} (CH_2)_p \text{-} COO^-]M^{2+}$

in der m, n und p, die gleich oder verschieden sind, einen Wert von 1 bis 5 haben

- eine Verbindung der Formel (3)

  $[S^{-}\text{-}(CH_2)_q\text{-}S^{-}]M^{2+}$

  in der q den Wert 6 hat,
- oder ein Hydrat von einer dieser Verbindungen,

  wobei M Kobalt und/oder Nickel bedeutet.

**6.** Verfahren nach Anspruch 5, dadurch gekennzeichnet, daß es sich bei mindestens einer Verbindung von Kobalt und/oder Nickel um Thiodipropionat von Kobalt oder Nickel der Formel (2) handelt, in der m und p den Wert 2 haben und n den Wert 1 hat.

**7.** Verfahren nach einem der Ansprüche 1 bis 6, dadurch gekennzeichnet, daß es sich bei mindestens einer Verbindung von Kobalt und/oder Nickel um eine schwefelfreie Verbindung oder um ein Hydrat einer schwefelfreien Verbindung handelt.

**8.** Verfahren nach Anspruch 7, dadurch gekennzeichnet, daß es sich bei mindestens einer Verbindung von Kobalt und/oder Nickel um ein organisches Salz, ein Hydroxid, um einen organischen Komplex oder ein Hydrat von einer dieser Verbindungen handelt.

**9.** Verfahren nach Anspruch 8, dadurch gekennzeichnet, daß mindestens eine Verbindung von Kobalt und/oder Nickel aus der Gruppe der Acetate, Propionate, Benzoate, Naphthenate, Hydroxide, Acetylacetonate und Hydrate dieser Verbindungen ausgewählt ist.

**10.** Verfahren nach einem der Ansprüche 1 bis 9, dadurch gekennzeichnet, daß die organische Hydroxylverbindung aus der Gruppe Ethylenglykol, Diethylenglykol, Polyethylenglykole und 1,3-Butandiol ausgewählt ist.

**11.** Verfahren nach einem der Ansprüche 1 bis 10, dadurch gekennzeichnet, daß die Lösung auf eine Temperatur von höchstens 200 °C gebracht wird.

**12.** Nach einem Verfahren gemäß einem der Ansprüche 1 bis 11 behandelte metallische Bewehrung, dadurch gekennzeichnet, daß das Auger-Profil dieser Bewehrung die gleichzeitige Anwesenheit von Kobalt und/oder Nickel, je nach der in der Lösung verwendeten Verbindung von Kobalt und/oder Nickel, in der Oberfläche und mindestens eines Metalls, das vor der Behandlung in der metallischen Oberfläche vorgelegen hat, zeigt.

**13.** Gegenstand, der mindestens eine metallische Bewehrung nach Anspruch 12 und eine in Kontakt mit der Bewehrung stehende, nicht-vulkanisierte Kautschukzusammensetzung aufweist.

**14.** Gegenstand nach Anspruch 13, dadurch gekennzeichnet, daß die Zusammensetzung Schwefel und mindestens einen Kautschuk, der aus der Gruppe Naturkautschuk, Polybutadien, Styrol-Butadien-Copolymerisate und Polyisopren ausgewählt ist, enthält.

**15.** Gegenstand nach einem der Ansprüche 13 oder 14, dadurch gekennzeichnet, daß die Zusammensetzung keine Verbindung auf der Basis von Kobalt und/oder Nickel enthält, die die Haftung der Bewehrung an der Zusammensetzung fördern kann.

**16.** Gegenstand nach einem der Ansprüche 13 bis 15, dadurch gekennzeichnet, daß es sich um einen Rohreifen handelt.

**17.** Verfahren, bestehend in der Vulkanisation eines Gegenstands nach einem der Ansprüche 13 bis 16, wobei es während der Vulkanisation zu einer Haftung der Bewehrung an der Zusammensetzung kommt.

**18.** Vulkanisierter Gegenstand, erhalten gemäß dem Verfahren von Anspruch 17.

19. Vulkanisierter Gegenstand nach Anspruch 18, dadurch gekennzeichnet, daß es sich um einen Reifen handelt.

Figure